# EUROPEAN PATENT APPLICATION

(11) **EP 3 115 180 A1**
(43) Date of publication of application: **11.01.2017**
(21) Application number: 14884567.0
(22) Date of filing: 03.03.2014
(51) Int. Cl.: B29C 67/00

(54) **NC MACHINE PROVIDED WITH A WORKPIECE ARRAY-MANUFACTURE MODULE AND WORKPIECE ARRAY-MANUFACTURE MODULE**

(71) Applicant: Kuo, Yung-Chih, New Taipei City, Taiwan 242 (TW)
(72) Inventor: Kuo, Yung-Chih, New Taipei City, Taiwan 242 (TW)
(74) Representative: Cabinet Chaillot
(86) International application number: PCT/CN2014/072808
(87) International publication number: WO 2015/131317

(57) **Abstract**

A numerical control processing machine assembled with work piece (60) printing/manufacturing module and the work piece (60) printing/manufacturing module. The numerical control processing machine includes a machine body (10) movable in the directions of three axes normal to each other and a rotatable pivoted section (30) disposed on the machine body (10). The pivoted section (30) has a head section (31) and an installation hole (32). A nozzle module (40) connected to a power source (50) is detachably installed in the installation hole (32) or on the head section (31). The nozzle module (40) has a nozzle (43) and an assembling head (45) or assembling section (80) correspondingly assembled in the installation hole (32) or on the head section (31). The nozzle module (40) is further formed with a material inlet (42). A material can enter the nozzle module (40) through the material inlet (42) to be heated into molten state. The nozzle (43) serves to eject the molten material onto a carrier platform (22) to print/manufacture a solid work piece (60) as real article.

## Description

### BACKGROUND OF THE INVENTION

### 1. Field of the Invention

The present invention relates generally to a work piece printing/manufacturing module applicable to a numerical control processing machine and a numerical control processing machine assembled with the work piece printing/manufacturing module, and more particularly to an installation/uninstallation device of a numerical control processing machine. The numerical control processing machine is able to three-dimensionally print/manufacture a solid work piece and modify the printed solid work piece to precisely shape the solid work piece.

### 2. Description of the Related Art

A conventional numerical control tool machine or processing machine (such as CNC) is able to operate a blade to three-dimensional ly move under parameter control so as to process a work piece, such as turn, mill, cut or grind the work piece.

As well known by those who are skilled in this field, such numerical control tool machine or processing machine pertains to a mature technique. Various conventional numerical control tool machines or processing machines with improved components have been developed or designed.

To speak representatively, the conventional numerical control processing machine and the relevant technique have some shortcomings in use and structural design. For example, it is necessary to manually modify the rough surface of the printed work piece. This is quite troublesome and time-consuming. As a result, the manufacturing cost is increased. The numerical control processing machine can be redesigned to change the use form and widen the application range so as to eliminate the shortcomings. For example, the numerical control processing machine is able to three-dimensionally print/manufacture a solid work piece and process the work piece, such as turn, mill, cut or grind the work piece. In addition, by means of a cooperative blade or laser module, the printed solid work piece can be modified and precisely shaped to be more similar to a real article. Therefore, the work piece printing precision is enhanced and the appearance of the work piece is beautified.

### SUMMARY OF THE INVENTION

It is therefore a primary object of the present invention to provide a numerical control processing machine assembled with work piece printing/manufacturing module and the work piece printing/manufacturing module applicable to the numerical control processing machine.

To achieve the above and other objects, the numerical control processing machine assembled with work piece printing/manufacturing module of the present invention includes a machine body movable in the directions of three axes normal to each other and a pivoted section disposed on the machine body. The three axes are defined as reference axis x, reference axis y and reference axis z. The pivoted section has a head section and an installation hole formed in the pivoted section. The numerical control processing machine further includes a nozzle module detachably installed in the installation hole of the pivoted section or on the head section. Substantially, the nozzle module has a base section and a nozzle disposed on the base section. An assembling head is disposed on the base section and correspondingly assembled in the installation hole. The nozzle module is further formed with a material inlet, whereby a material can enter the nozzle module through the material inlet to be heated into molten state. The nozzle serves to eject the molten material onto a carrier platform to print/manufacture a solid work piece in the form of a real article. Accordingly, the numerical control processing machine has three-dimensional printing function. Moreover, the pivoted section serves to drive a blade or laser module to modify and process the printed solid work piece so as to precisely shape the solid work piece. In contrast, in the conventional technique, it is necessary to manually modify the rough surface of the printed work piece. This is quite troublesome and time-consuming. As a result, the manufacturing cost is increased. The numerical control processing machine of the present invention eliminates these shortcomings.

Alternatively, the numerical control processing machine assembled with work piece printing/manufacturing module of the present invention includes a machine body movable in the directions of three axes normal to each other and a pivoted section disposed on the machine body. The three axes are defined as reference axis X, reference axis y and reference axis z. The pivoted section has a head section and an installation hole formed in the pivoted section. The numerical control processing machine further includes a nozzle module detachably assembled with the pivoted section. The nozzle module has an assembling section including a first portion and a second portion. A base section and a nozzle are mounted on the first portion. The assembling section is mounted on the head section of the pivoted section, whereby the nozzle module is integrally assembled with the pivoted section. The nozzle module is further formed with a material inlet, whereby a material can enter the nozzle module through the material inlet to be heated into molten state. The nozzle serves to eject the molten material onto a carrier platform to print/manufacture a solid work piece.

The work piece printing/manufacturing module of the present invention includes a nozzle module mountable on a numerical control processing machine. The nozzle module has a material inlet, whereby a material for printing/manufacturing a work piece can enter the nozzle module through the material inlet. The work piece printing/manufacturing module further includes a nozzle for ejecting the material for printing/manufacturing the work piece.

In the above work piece printing/manufacturing module, the assembling head of the nozzle module has a conic tip. An elastic holder is disposed in the installation hole of the pivoted section corresponding to the conic tip of the nozzle module. After the assembling head is installed into the installation hole, the elastic holder can hold the conic tip to integrally assemble the nozzle module and the pivoted section with each other. Therefore, the nozzle module is movable along with the machine body or the pivoted section to three-dimensionally print/manufacture the solid work piece.

In the above work piece printing/manufacturing module, the assembling section of the nozzle module is a plate body. The assembling section includes a first portion and a second portion. The nozzle is mounted on the first portion. The section portion is formed with an assembling hole corresponding to the head section of the pivoted section of the machine body, whereby the assembling section can be assembled on the head section of the pivoted section. Therefore, the nozzle module is movable along with the machine body or the pivoted section to three-dimensionally print/manufacture the solid work piece.

In the above work piece printing/manufacturing module, a blade or a laser module can be installed in the installation hole of the pivoted section. The blade or the laser (material-removing) module is movable along with the pivoted section to modify and process the printed solid work piece, such as to turn, mill, cut and grind the solid work piece.

The present invention can be best understood through the following description and accompanying drawings, wherein:

### BRIEF DESCRIPTION OF THE DRAWINGS

Fig. 1 is a perspective assembled view of the present invention, showing that the machine body, the pivoted section, the nozzle module and the carrier platform are cooperatively assembled with each other, in which the phantom lines show the motion of the pivoted section;
Fig. 2 is a perspective view of the nozzle module of the present invention, showing that the nozzle module includes an assembling head;
Fig. 3 is a sectional assembled view of the nozzle module and the pivoted section of the present invention, showing that the assembling head of the nozzle module is installed in the installation hole of the pivoted section;
Fig. 4 is a perspective view of the nozzle module of another embodiment of the present invention, showing that the nozzle module includes an assembling section and a nozzle arranged on the assembling section; and
Fig. 5 is a sectional assembled view of the present invention, showing that the assembling section of the nozzle module is assembled with the pivoted section of the machine body.

### DETAILED DESCRIPTION OF THE PREFERRED EMBODIMENTS

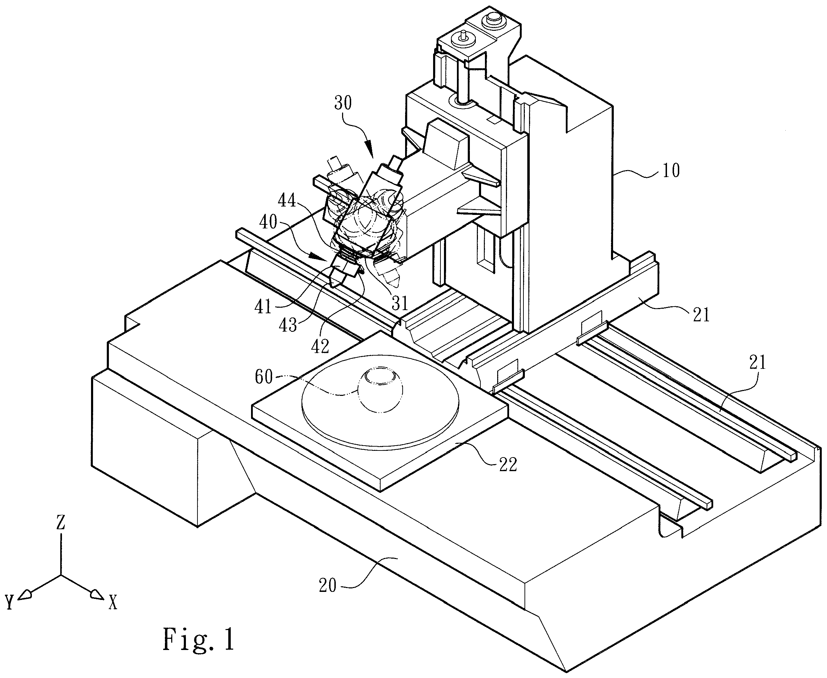

Please refer to Figs. 1 to 3. In this embodiment, the numerical control processing machine assembled with work piece printing/manufacturing module of the present invention is a numerical control tool machine or the like processing machine (such as CNC) for illustration purposes. The numerical control processing machine includes a machine body 10. In Fig. 1, according to the direction of the machine body 10, three axes, that is, reference axis x, reference axis y and reference axis z, are defined. The three axes are normal to each other. The machine body 10 is disposed on a machine bed 20. A carrier platform 22 for carrying work pieces is arranged on the machine bed 20. Rails 21 are mounted on the machine bed 20, whereby the machine body 10 can at least move in the directions of the reference axis x and reference axis y.

In this embodiment, the machine body 10 includes a pivoted section 30. The pivoted section 30 can move in the direction of the reference axis z. In addition, the pivoted section 30 can three-dimensionally rotate. This pertains to prior art and thus will not be further described.

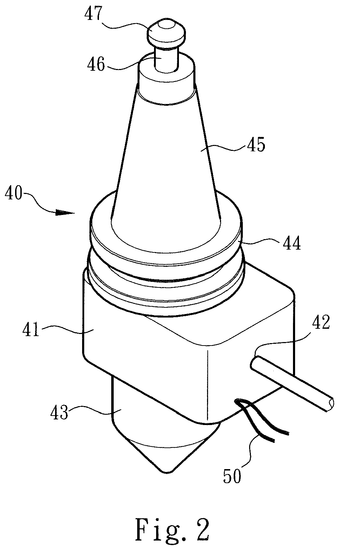

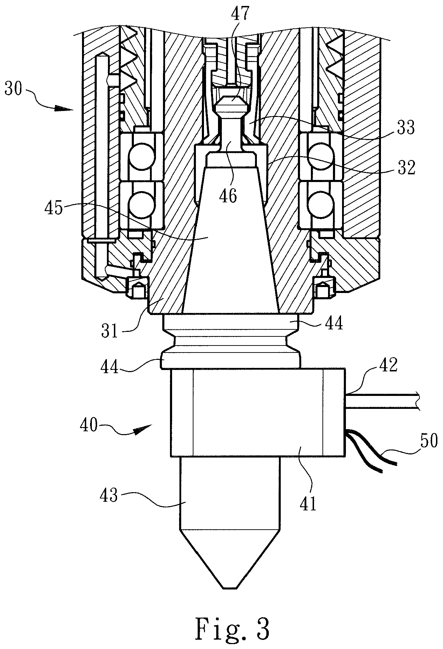

Figs. 2 and 3 show that the pivoted section 30 includes a head section 31 for assembling with a tool bit and an internal installation hole 32. An elastic holder 33 is arranged in the installation hole 32. The elastic holder 33 cooperates with the installation hole 32 to detachably assemble with a nozzle module 40.

Referring to Fig. 2, the nozzle module 40 includes a base section 41 connected to a power source 50. The power source 50 supplies power to a heating member (not shown) disposed in the nozzle module 40, whereby the nozzle module 40 has heating or temperature control effect. The base section 41 is formed with a material inlet 42. A linear plastic material or granular plastic material or the like material can enter the base section 41 through the material inlet 42 to be heated. With the reference axis y as a reference, a nozzle 43 is disposed at one end of the base section 41 (or under the base section 41) for discharging molten plastic material. A shoulder section 44 and an assembling head 45 connected with the shoulder section 44 are disposed at the other end of the base section 41 (or on the base section 41). The assembling head 45 is a conic body 45. The assembling head 45 has a neck section 46 and a conic tip 47 connected with the neck section 46.
In this embodiment, the width (or diameter) of the assembling head 45 is larger than the width (or diameter) of the conic tip 47. The width (or diameter) of the conic tip 47 is larger than the width (or diameter) of the neck section 46.

Please refer to Fig. 3. An operator can install the assembling head 45 of the nozzle module 40 into the installation hole 32 of the pivoted section 30 until the shoulder section 44 is positioned in a stop position where the shoulder section 44 is stopped by the head section 31 of the pivoted section 30. That is, when the shoulder section 44 abuts against one end of the head section 31, the elastic holder 33 will grasp or hold the neck section 46 and the conic tip 47 of the assembling head 45, whereby the nozzle module 40 is integrally assembled with the pivoted section 30. Under such circumstance, the nozzle module 40 is three-dimensionally movable along with the machine body 10 and the pivoted section 30. The nozzle 43 of the nozzle module 40 serves to eject the molten plastic material onto the carrier platform 22 and continuously overlay one plane layer of molten plastic material on another so as to print/manufacture a solid work piece 60 in the form of a real body on the carrier platform 22. Accordingly, the numerical control tool machine has three-dimensional printing function.

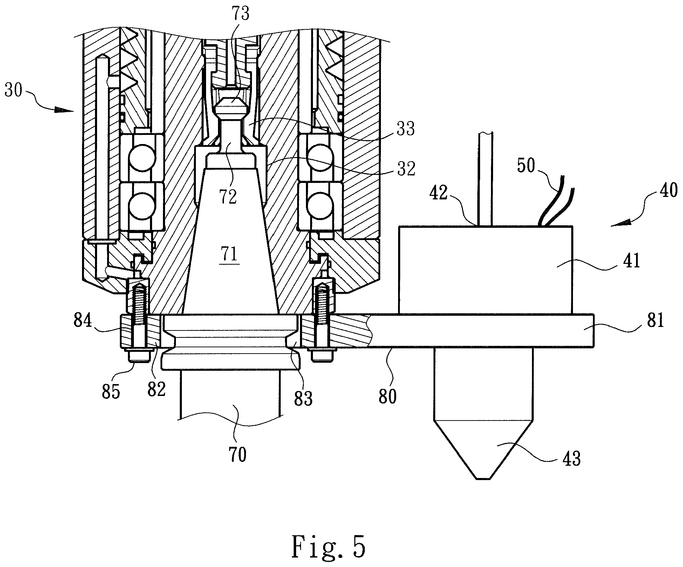

In a preferred embodiment, an operator can detach and pull out the nozzle module 40 to disassemble the nozzle module 40 from the pivoted section 30. Thereafter, a blade or laser module 70 (as shown in Fig. 5) for removing the material can be installed into the installation hole 32 of the pivoted section 30. The blade or laser module 70 (for emitting laser to remove the material) can be three-dimensionally moved along with the machine body 10 and the pivoted section 30 so as to modify and process the printed solid work piece 60 and precisely shape the solid work piece 60.

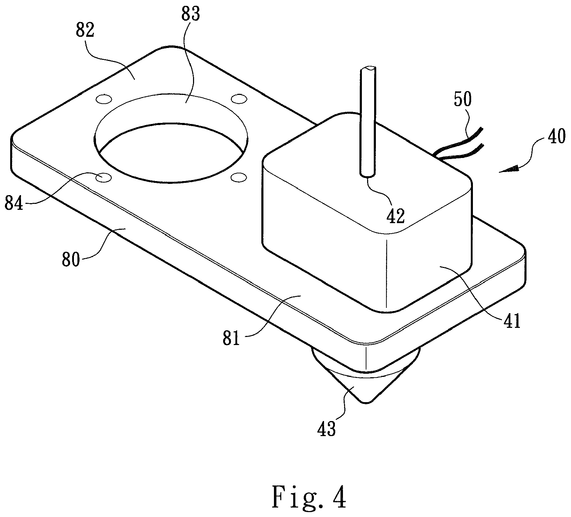

Please now refer to Figs. 4 and 5. In a modified embodiment, the nozzle module 40 includes an assembling section 80 in the form of a plate body. The assembling section 80 includes a first portion 81 and a second portion 82. The base section 41 with the material inlet 42 and the nozzle 43 are mounted on the first portion 81. The base section 41 is connected to the power source 50, whereby the nozzle module 40 has temperature control effect. The second portion 82 is formed with an assembling hole 83 corresponding to the head section 31 of the pivoted section 30, whereby the assembling section 80 can be mounted on the head section 31 of the pivoted section 30. In addition, the second portion 82 is formed with multiple locking holes 84. Multiple fixing members 85 (such as, but not limited to, bolts or pins) are passed through the locking holes 84 to fix the assembling section 80 of the nozzle module 40 with the head section 31 of the pivoted section 30. Therefore, the nozzle module 40 (or the assembling section 80) can be moved along with the machine body 10 or the pivoted section 30 to three-dimensionally print/manufacture the solid work piece 60.

As especially shown in Fig. 5, the blade or laser module 70 is assembled in the installation hole 32 of the pivoted section 30. The blade or laser module 70 also includes an assembling head 71, a neck section 72 and a conic tip 73. The elastic holder 33 cooperates with the installation hole 32 of the pivoted section 30 to detachably assemble with the blade or laser module 70.

Referring to Fig. 5, the assembling section 80 drives the nozzle 43 of the nozzle module 40 to three-dimensionally move along with the pivoted section 30. The nozzle 43 serves to eject the molten plastic material onto the carrier platform 22 to print/manufacture the solid work piece 60. Thereafter, the pivoted section 30 drives the blade or laser module 70 to modify and process the printed solid work piece 60 and precisely shape the solid work piece 60. It should be noted that the pivoted section 30 also can drive the blade or laser module 70 to process a common work piece, such as to turn, mill, cut or grind the common work piece.

According to the above arrangement, in comparison with the conventional numerical control processing machine, the numerical control processing machine assembled with work piece printing/manufacturing module of the present invention has the following advantages:

The numerical control processing machine and the work piece printing/manufacturing module and the relevant components have been redesigned to be different from the conventional numerical control processing machine. For example, the nozzle module 40 includes a base section 41 and a nozzle 43. A shoulder section 44, an assembling head 45, a neck section 46 and a conic tip 47 are disposed on the base section 41. The assembling head 45 is detachably installed in the installation hole 32 of the pivoted section 30. Alternatively, the nozzle module 40 includes an assembling section 80. The assembling section 80 is locked with the head section 31 of the pivoted section 30. The assembling section 80 serves to drive the nozzle module 40 to three-dimensionally move so as to print/manufacture a solid work piece 60 in the form of a real body on the carrier platform 22. Accordingly, the numerical control processing machine has three-dimensional printing function. Moreover, the pivoted section 30 drives the blade or laser module 70 to process the work piece 60, such as to turn, mill, cut or grind the work piece 60 so as to precisely shape the work piece 60. Therefore, the structure and the use/operation form of the conventional numerical control processing machine are changed to widen the application range thereof.

Especially, the blade or laser module 70 of the numerical control processing machine serves to modify and process the solid work piece 60 so that the solid work piece 60 can be precisely shaped to have a configuration more similar to that of the real article. Therefore, the work piece printing precision is enhanced and the appearance of the work piece 60 is beautified. Furthermore, in the conventional technique, it is necessary to manually modify the rough surface of the printed work piece. This is quite troublesome and time-consuming. As a result, the manufacturing cost is increased. The numerical control processing machine of the present invention eliminates these shortcomings.

In conclusion, the numerical control processing machine and the work piece printing/manufacturing module of the present invention are effective and different from the conventional numerical control processing machine in space form. The numerical control processing machine and the work piece printing/manufacturing module of the present invention are inventive, greatly advanced and advantageous over the conventional numerical control processing machine.

The above embodiments are only used to illustrate the present invention, not intended to limit the scope thereof. Many modifications of the above embodiments can be made without departing from the spirit of the present invention.

## Claims

1. A numerical control processing machine assembled wi th work piece printing/manufacturing module, comprising a machine body (10) movable in the directions of three axes normal to each other and a pivoted section (30) disposed on the machine body (10), the three axes being defined as reference axis x, reference axis y and reference axis z, the pivoted section (30) having a head section (31) and an installation hole (32) formed in the pivoted section (30), the numerical control processing machine further comprising a nozzle module (40) detachably assembled with the pivoted section (30), the nozzle module (40) having a base section (41) and a nozzle (43) disposed on the base section (41), an assembling head (45) being disposed on the base section (41) and installed in the installation hole (32), whereby the nozzle module (40) is integrally assembled with the pivoted section (30), the nozzle module (40) being further formed with a material inlet (42), whereby a material can enter the nozzle module (40) through the material inlet (42) to be heated into molten state, the nozzle (43) serving to eject the molten material onto a carrier platform (22) to print/manufacture a solid work piece (60).

2. The numerical control processing machine assembled with work piece printing/manufacturing module as claimed in claim 1, wherein the material inlet (42) is disposed on the base section (41), whereby the material can enter the base section (41) through the material inlet (42), the nozzle module (40) being connected to a power source (50), the power source (50) serving to supply power to a heating member disposed in the nozzle module (40), the nozzle (43) being disposed under the base section (41), a shoulder section (44) being disposed on the base section (41) and connected with the assembling head (45), the assembling head (45) having a neck section (46) and a conic tip (47) connected with the neck section (46), an elastic holder (33) being arranged in the installation hole (32), the elastic holder (33) serving to hold the neck section (46) and the conic tip (47) with the shoulder section (44) abutting against the head section (31).

3. The numerical control processing machine assembled with work piece printing/manufacturing module as claimed in claim 2, wherein the assembling head (45) is a conic body, the assembling head (45) having a width larger than a width of the conic tip (47), the width of the conic tip (47) being larger than a width of the neck section (46).

4. The numerical control processing machine assembled with work piece printing/manufacturing module as claimed in claim 1, 2 or 3, wherein the machine body (10) is disposed on a machine bed (20) and the carrier platform (22) is arranged on the machine bed (20), rails (21) being mounted on the machine bed (20), whereby the machine body (10) can at least move in the directions of the reference axis x and reference axis y, the pivoted section (30) being rotatable in the direction of the reference axis Z.

5. A numerical control processing machine assembled with work piece printing/manufacturing module, comprising a machine body (10) movable in the directions of three axes normal to each other and a pivoted section (30) disposed on the machine body (10), the three axes being defined as reference axis x, reference axis y and reference axis z, the pivoted section (30) having a head section (31) and an installation hole (32) formed in the pivoted section (30), the numerical control processing machine further comprising a nozzle module (40) detachably assembled with the pivoted section (30), the nozzle module (40) having an assembling section (80) including a first portion (81) and a second portion (82), a base section (41) and a nozzle (43) being mounted on the first portion (81), the assembling section (80) being mounted on the head section (31) of the pivoted section (30), whereby the nozzle module (40) is integrally assembled with the pivoted section (30), the nozzle module (40) being further formed with a material inlet (42), whereby a material can enter the nozzle module (40) through the material inlet (42) to be heated into molten state, the nozzle (43) serving to eject the molten material onto a carrier platform (22) to print/manufacture a solid work piece (60).

6. The numerical control processing machine assembled with work piece printing/manufacturing module as claimed in claim 5, wherein the second portion (82) of the assembling section (80) of the nozzle module (40) is formed with an assembling hole (83) corresponding to the head section (31) of the pivoted section (30).

7. The numerical control processing machine assembled with work piece printing/manufacturing module as claimed in claim 5, wherein the material inlet (42) is disposed on the base section (41), the nozzle module (40) being connected to a power source (50), the power source (50) serving to supply power to a heating member disposed in the nozzle module (40), the second portion (82) being formed with multiple locking holes (84), multiple fixing members (85) being passed through the locking holes (84) to fix the assembling section (80) of the nozzle module (40) with the head section (31) of the pivoted section (30).

8. The numerical control processing machine assembled with work piece printing/manufacturing module as claimed in claim 5, wherein an elastic holder (33) is arranged in the installation hole (32), a blade or a laser module (70) being installed in the installation hole (32), the blade or the laser module (70) having an assembling head (71), a neck section (72) and a conic tip (73) connected with the neck section (72), the elastic holder (33) serving to detachably hold the assembling head (71), the neck section (72) and the conic tip (73) installed in the installation hole (32) of the pivoted section (30).

9. The numerical control processing machine assembled with work piece printing/manufacturing module as claimed in claim 5, 6, or 7, wherein the machine body (10) is disposed on a machine bed (20) and the carrier platform (22) is arranged on the machine bed (20), rails (21) being mounted on the machine bed (20), whereby the machine body (10) can at least move in the directions of the reference axis x and reference axis y, the pivoted section (30) being rotatable in the direction of the reference axis Z.

10. The numerical control processing machine assembled with work piece printing/manufacturing module as claimed in claim 5, 6 or 7, wherein the assembling section (80) is a plate body.

11. A work piece printing/manufacturing module comprising:
a nozzle module (40) mountable on a numerical control processing machine, the nozzle module (40) having a material inlet (42), whereby a material for printing/manufacturing a work piece (60) can enter the nozzle module (40) through the material inlet (42) ; and
a nozzle (43) for ejecting the material for printing/manufacturing the work piece (60).

12. The work piece printing/manufacturing module as claimed in claim 11, wherein the nozzle module (40) has a base section (41), the nozzle (43) being disposed at one end of the base section (41), an assembling head (45,71) being disposed at the other end of the base section (41), the assembling head (45, 71) being directly mountable on the numerical control processing machine, the numerical control processing machine including a pivoted section (30) and a head section (31), the assembling head (45, 71) being installed in an installation hole (32) of the pivoted section (30), whereby the nozzle module (40) is assembled with the pivoted section (30).

13. The work piece printing/manufacturing module as claimed in claim 12, wherein the nozzle (43) is disposed under the base section (41), a shoulder section (44) being disposed on the base section (41) and connected with the assembling head (45, 71), the assembling head (45, 71) having a neck section (46, 72) and a conic tip (47, 73) connected with the neck section (46, 72), an elastic holder (33) being arranged in the installation hole (32), the elastic holder (33) serving to hold the neck section (46, 72) and the conic tip (47, 73) with the shoulder section (44) abutting against the head section (31).

14. The work piece printing/manufacturing module as claimed in claim 13, wherein the assembling head (45, 71) is a conic body, the assembling head (45, 71) having a width larger than a width of the conic tip (47, 73), the width of the conic tip (47, 73) being larger than a width of the neck section (46, 72).

15. The work piece printing/manufacturing module as claimed in claim 14, wherein the nozzle module (40) has an assembling section (80) including a first portion (81) and a second portion (82), the nozzle (43) being mounted on the first portion (81), the second portion (82) being correspondingly mounted on the pivoted section (30) of the numerical control processing machine, whereby the assembling section (80) is mounted on the pivoted section (30).

16. The work piece printing/manufacturing module as claimed in claim 15, wherein the second portion (82) of the assembling section (80) is formed with an assembling hole (83) corresponding to the head section (31) of the pivoted section (30).

17. The work piece printing/manufacturing module as claimed in claim 15 or 16, wherein the second portion (82) is formed with multiple locking holes (84), multiple fixing members (85) being passed through the locking holes (84) to fix the assembling section (80) of the nozzle module (40) on the pivoted section (30).

18. The work piece printing/manufacturing module as claimed in any of claims 11 to 16, wherein the nozzle module (40) is connected to a power source (50), the power source (50) serving to supply power to a heating member disposed in the nozzle module (40).

19. The work piece printing/manufacturing module as claimed in any of claims 12 to 16, wherein a blade or a laser module (70) is assembled with the pivoted section (30) for removing the material and processing the work piece (60).

20. The work piece printing/manufacturing module as claimed in claim 18, wherein a blade or a laser module (70) is assembled with the pivoted section (30) for removing the material and processing the work piece (60).

21. The work piece printing/manufacturing module as claimed in claim 15 or 16, wherein the assembling section (80) is a plate body.
